# EUROPEAN PATENT APPLICATION

(11) **EP 1 355 493 A1**
(43) Date of publication of application: **22.10.2003**
(21) Application number: 01271011.7
(22) Date of filing: 07.12.2001
(51) Int. Cl.: H04N 5/93, H04N 9/80, G11B 20/10

(54) **MULTIFORMAT RECORDING/REPRODUCING APPARATUS**

(30) Priority: 12.12.2000 JP 2000377201
(71) Applicant: MATSUSHITA ELECTRIC INDUSTRIAL CO., LTD., Kadoma-shi, Osaka 571-8501 (JP)
(72) Inventor: SAKAI, Akihira, Hirakata-shi, Osaka 573-1106 (JP)
(74) Representative: Urner, Peter, Dipl.-Phys.
(86) International application number: JP0110756
(87) International publication number: WO02049355

(57) **Abstract**

A multiformat recording and reproducing apparatus comprising a signal reproduction unit for reproducing a video signal recorded in a magnetic medium, a format determining unit for determining a format of the reproduced video signal, a format conversion unit for converting the reproduced video signal into a plurality of video signals in which at least one of the number of scanning lines, a scanning line processing method and a frequency is different, and a signal output unit for outputting the converted video signal. The format conversion unit can convert the video signal recorded in the magnetic medium into a video signal having a plurality of different formats in which at least one of the number of scanning lines, the scanning line processing method and the frequency is different.

## Description

### TECHNICAL FIELD

The present invention relates to a magnetic medium for a video signal or, in particular, to a multiformat recording and reproducing apparatus capable of converting the video signal recorded on a video tape into a different format.

### BACKGROUND ART

As a television standard system, for example, what is called "NTSC (National Television System Committee)" is employed in Japan. This system is defined by 170M and 259M of the SMPTE standard.

On the other hand, a Hi-Vision (High Definition Television System) TV system is also employed now and has begun to find partial applications in the television broadcasting. This system is defined by 292M, 260M and 274M of the SMPTE standard.

Thus, the video signal stored in a magnetic storage medium (such as a video tape for broadcasting by broadcasting stations) for recording the contents (images and voices) of broadcasting from television broadcasting stations has various formats adapted for the various systems described above. A video signal format corresponding to the NTSC system defined by the SMPTE 170M is an example.

In the presence of the video signals of various formats as described above, the requirement arises to convert a video signal of a given format to a video signal of a different format, such as when converting a video signal for a movie into a video signal for a video tape recording. The conventional format conversion apparatus is capable of only what is called one-to-one conversion in which the original video signal is converted into a specific one video signal.

The primary object of the present invention is to provide a multiformat recording and reproducing apparatus capable of converting a given video signal into a video signal of an arbitrary one of various formats.

### DISCLOSURE OF THE INVENTION

A multiformat recording and reproducing apparatus according to this invention comprises a signal reproduction unit for reproducing the video signal recorded in a magnetic medium, a format determining unit for determining the format of the reproduced video signal, a format conversion unit for converting the reproduced video signal into a plurality of video signals in which at least one of the number of scanning lines, a scanning line processing method and a frequency is different, and a signal output unit for outputting the converted video signal.

Also, the recording and reproducing apparatus according to the invention comprises a signal reproduction unit for reproducing the video signal recorded in a magnetic medium, a format determining unit for determining the format of the reproduced video signal, a format conversion unit for converting the reproduced video signal into a plurality of video signals in which at least one of the number of scanning lines, the scanning line processing method and the frequency is different, a signal output unit for outputting the converted video signal, a time code output unit for outputting the time code of the converted video signal, and a reference clock generating unit for generating a reference clock for synchronizing the phase between the time code of the reproduced video signal and the time code of the converted video signal. Incidentally, the reference clock is 6 Hz, for example.

With the multiformat recording and reproducing apparatus according to this invention, the video signal recorded in a magnetic medium can be converted into video signals of a plurality of different formats and the time code of the video signal recorded in the magnetic medium and the time code of the converted video signal can be synchronized in phase with each other at the same time.

Also, the multiformat recording and reproducing apparatus according to this invention may comprise a signal reproduction unit for reproducing, at variable speeds, the video signal recorded in a magnetic medium, wherein the video signal recorded in the magnetic medium can be converted into video signals of a plurality of different . formats by a format conversion unit while being reproduced at variable speeds.

Further, the multiformat recording and reproducing apparatus according to this invention may comprise a signal reproduction unit for reproducing at variable n-fold speeds the video signal recorded in a magnetic medium, and a reference clock generating unit for generating a reference clock for synchronizing the phase between the time code of the reproduced video signal and the time code of the converted video signal according to an n-fold reference clock, wherein the video signal recorded in the magnetic medium can be converted into video signals of a plurality of different formats by a format conversion unit while being reproduced at variable speeds, on one hand, and the time code of the video signal recorded in the magnetic medium and the time code of the converted video signal can be synchronized in phase with each other by the reference clock on the other hand.

### BRIEF DESCRIPTION OF THE DRAWINGS

Fig. 1 is a block diagram showing a multiformat recording and reproducing apparatus according to an embodiment of this invention.
Fig. 2 is a block diagram showing a format conversion circuit of a multiformat recording and reproducing apparatus according to an embodiment of this invention.
Fig. 3 is a flowchart for format conversion in a multiformat recording and reproducing apparatus according to an embodiment of this invention.
Fig. 4 is a time chart showing the manner of format conversion from 24 Hz to 30 Hz according to an embodiment of this invention.
Fig. 5 is a flowchart for synchronization of time code phase in a multiformat recording and reproducing apparatus according to an embodiment of this invention.
Fig. 6 is a flowchart for synchronization of time code phase in a multiformat recording and reproducing apparatus according to an embodiment of this invention.

### BEST MODE FOR CARRYING OUT THE INVENTION

Preferred embodiments of the invention will be described in detail below with reference to the drawings.

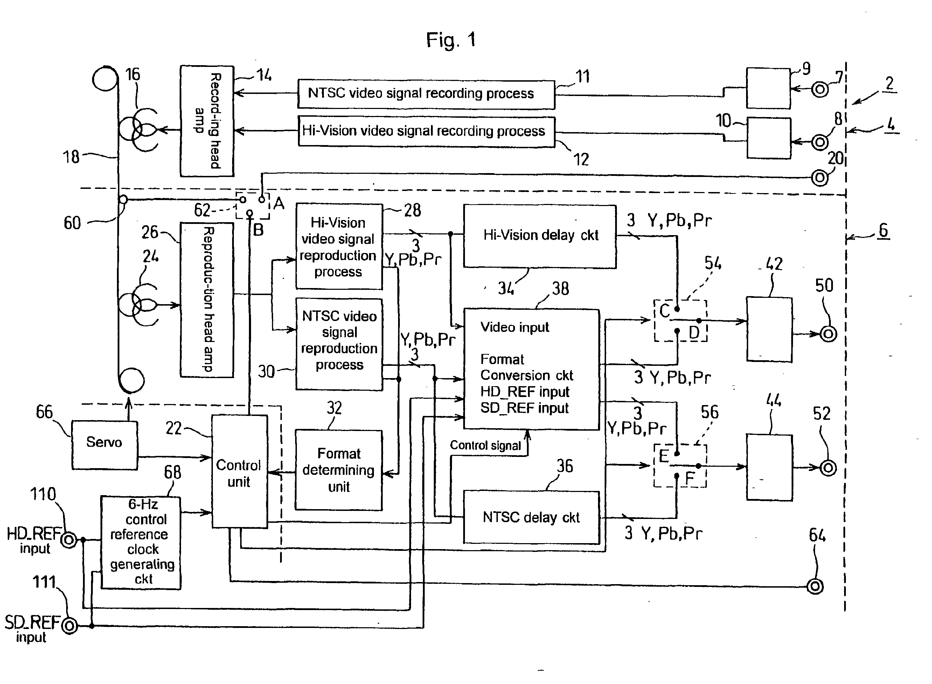

An embodiment of the invention will be explained with reference to Figs. 1 to 6.

Fig. 1 is a block diagram showing a multiformat recording and reproducing apparatus 2 according to an embodiment of this invention. The apparatus 2 comprises a recording processing unit 4 and a reproduction processing unit 6.

The recording processing unit 4 includes an NTSC video signal input terminal 7, an NTSC input interface unit 9, an NTSC video signal recording processing unit 11, a Hi-Vision video signal input terminal 8, a Hi-Vision input interface unit 10, a Hi-Vision video signal recording processing unit 12, a recording head amplifier unit 14, a recording head unit 16 and a time code input terminal 20. In this apparatus 2, an NTSC system video signal is input from the NTSC video signal input terminal 7, and a Hi-Vision TV system video signal is input from the Hi-Vision video signal input terminal 8. The NTSC video signal input from the NTSC video signal input terminal 7 is signal-adjusted by the recording head amplifier unit 14 through the NTSC input interface unit 9 and the NTSC video signal recording processing unit 11, and recorded on the video tape 18 by the recording head unit 16. Also, the Hi-Vision video signal input from the Hi-Vision video signal input terminal 8 is signal-adjusted by the recording head amplifier unit 14 through the Hi-Vision input interface unit 10 and the Hi-Vision video signal recording processing unit 12, and recorded on the video tape 18 by the recording head unit 16. Further, a time code is input from the time code input terminal 20.

The reproduction processing unit 6 generally includes:
a reproduction head unit 24, a reproduction head amplifier unit 26,
a Hi-Vision video signal processing unit 28, an NTSC video signal processing unit 30,
a format determining unit 32,
a Hi-Vision delay unit 34, a NTSC delay unit 36, a format conversion circuit unit 38,
a first switching unit 54, a second switching unit 56, a third switching unit 62,
a first encoder output interface unit 42, a second encoder output interface unit 44,
a first video signal output terminal 50, a second video signal output terminal 52,
a time code head 60, a time code output terminal 64, and
a servo 66, and a 6-Hz control reference clock generating unit, 68.

Specifically, the reproduction processing unit 6, having a substantially similar configuration to the conventional video tape reproduction apparatus, is configured to perform the reproduction operation on a video tape for recording any one of the Hi-Vision TV system video signal defined by SMPTE 292M, SMPTE 260M or SMPTE 274M, the NTSC system video signal defined by SMPTE 170M or SMPTE 259M, or the 525P progress scanning TV system video signal defined by SMPTE 293 or SMPTE 294M. The first video signal output terminal 50 is configured to output the Hi-Vision TV system video signal, and the second video signal output terminal 52 to output the NTSC system or progress scanning TV system video signal described above.

The process in which the video signal recorded on the video tape 18 is output to the first and second video signal output terminals 50 and 52 is explained below.

The video signal read from the reproduction head unit 24 and signal-adjusted through the reproduction head amplifier 26 is transmitted to the Hi-Vision video signal reproduction processing unit 28 or the NTSC video signal reproduction processing unit 30.

The video signal transmitted to the Hi-Vision video signal reproduction processing unit 28 or the NTSC video signal reproduction processing unit 30 contains the data on the format thereof, which is utilized in this embodiment. Specifically, the format information is written in the non-image portion of each data corresponding to a single screen making up the video signal. The format determining unit 32 reads the particular format information and determines which format is associated with the video signal of the video tape 18. The format information obtained from the format determining unit 32 is transmitted to the control unit 22.

The information obtained from the format determining unit 32 is transmitted, by way of a route not shown, to the first video signal output terminal 50 or the second video signal output terminal 52 through the first encoder output interface unit 42 or the second encoder output interface unit 44, for example, and can be displayed appropriately on a screen unit (not shown).

Next, the format conversion is explained. In converting the format, the video tape 18 is reproduced while identifying the format of the video tape 18 by the format determining unit 32, and the format is converted into a desired format by the format conversion circuit 38. The format is defined to include the number of scanning lines, the scanning line processing method, the frame frequency and the field frequency. These are converted by the format conversion circuit 38.

Incidentally, by turning the first switching unit 54 to C side, the original Hi-Vision video signal is sent to the first encoder output interface unit 42, and by turning the switching unit 54 to D side, the Hi-Vision video signal after conversion is sent to the first encoder output interface unit 42. Also, by turning the second switching unit 56 to F side, the original NTSC video signal is sent to the second encoder output interface unit 44, and by turning the second switching unit 56 to E side, the NTSC video signal after conversion is sent to the second encoder output interface unit 44. Further, by turning the third switching unit 62 to A side, the time code input from the time code input terminal 20 can be written on the video tape 18, and by turning the third switching unit 62 to B side, the time code of the video tape 18 read by the time code head 60 can be sent to the control unit 22.

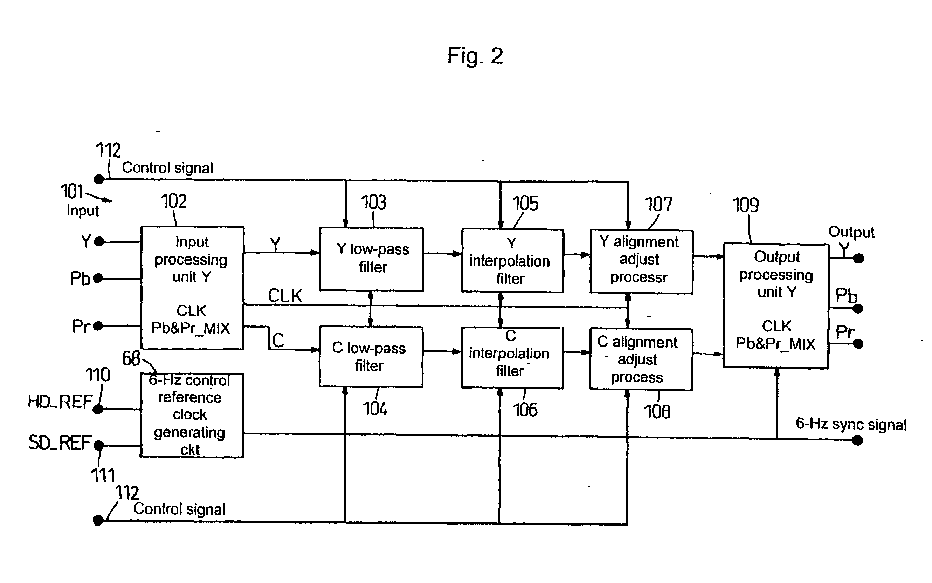

With reference to Fig. 2, the format conversion circuit 38 is explained. First, the Y, Pb and Pr signals are input from the video input terminal 101, and the Pb and Pr signals are mixed in the input processing unit 102, thereby generating a C signal. The C sync code signal in synchronism with the reference clock is added to the C signal, and the Y sync code signal to the Y signal. The subsequent filter processing is executed based on the reference clock, the Y sync code signal and the C sync code signal.

In the Y low-pass filter 103, the data of the Y signal constituting the brightness signal is subjected to the thinning-out process or the Y signal data is subjected to the amplification process based on the preceding and following fields by the combination of the input format and the output format information from the control unit.

In the C low-pass filter 104, the data of the C signal constituting the color difference signal is subjected to the thinning-out process or the amplification process based on the preceding and following fields by the combination of the input format and the output format information from the control unit.

In the Y interpolation filter 105, the data of the Y signal constituting the brightness signal is subjected to the amplification operation process based on the preceding and following scores of lines by the combination of the input format and the output format information from the control unit. Based on the Y sync code signal, the brightness signal that makes up the Y signal having the number of scanning lines and the number of pixels corresponding to the output format is generated.

In the C interpolation filter 106, the data of the C signal constituting the color difference signal is subjected to the amplification operation process based on the preceding and following scores of lines by the combination of the input format and the output format information from the control unit. Based on the C sync code signal, the color difference signal that makes up the C signal having the number of scanning lines and the number of pixels corresponding to the output format is generated.

In the Y alignment adjusting process 107, the reference clock and the Y sync code signal are synchronized in timing with each other, and output in synchronism with the timing of the frame frequency or the field frequency of the output format.

In the C alignment adjusting process 108, the reference clock and the C sync code signal are synchronized in timing with each other, and output in synchronism with the timing of the frame frequency or the field frequency of the output format.

In the output processing unit 109, the Y output signal is generated from the Y signal added to the Y sync code signal in synchronism with the reference clock, and the Pb and Pr signals are generated by being separated from the C signal added to the C sync code signal synchronized with the reference clock.

Also, the 6-Hz control reference clock generating circuit 68 is formed with an HD-signal REF (reference signal) input unit 110 and an SD-signal REF input unit 111. In the case where the REF signals of different field frequencies are input to the HD-signal REF input unit 110 and the SD-signal REF input unit 111, the 6-Hz control reference clock synchronized with each REF signal is generated. For example, the HD-signal REF input unit 110 is supplied with a REF signal of 24-Hz field frequency and the SD-signal REF input unit 111 is supplied with a REF signal of 30-Hz field frequency. As a result, in the case where a video signal of 24-Hz field frequency is converted to a video signal of 30-Hz field frequency or in the case where a video signal of 30-Hz field frequency is converted to a video signal of 24-Hz field frequency, a 6-Hz control reference clock synchronized with each video signal is generated, and the converted video signal synchronized with the 6-Hz control reference clock is output.

In accordance with the control signal 112 from the control unit 22, the input/output formats and the filter coefficients of the Y low-pass filter 103, the C low-pass filter 104, the Y interpolation filter 105, the C interpolation filter 106, the Y alignment adjusting process 107 and the C alignment adjusting process 108 are set, thereby making it possible to output a video signal corresponding to a plurality of formats.

Tables 1 and 2 describe a specific format conversion. Incidentally, the formats shown in Tables 1 and 2 represent only an example, and frequencies are not limited to these values. In the following explanation, it is assumed that 23.9 Hz is substantially equal to 24 Hz, 29.97 Hz to 30 Hz and 59.94 Hz to 60 Hz.

**[Table 1]**

| | Video signal before conversion | | Video signal after conversion | |
|---|---|---|---|---|
| | Format | Frequency | Format | Frequency |
| 1 | 1920 × 1080I | 29.97 Hz | 1920 × 1035I | 29.97 Hz |
| | | | 1280 × 720P | 59.94 Hz |
| | | | 720 × 483P | 59.94 Hz |
| | | | 720 × 487I | 29.97 Hz |
| 2 | 1920 × 1035I | 29.97 Hz | 1920 × 1080I | 29.97 Hz |
| | | | 1280 × 720P | 59.94 Hz |
| | | | 720 × 483P | 59.94 Hz |
| | | | 720 × 487I | 29.97 Hz |
| 3 | 1280 × 720P | 59.94 Hz | 1920 × 1080I | 29.97 Hz |
| | | | 1920 × 1035I | 29.97 Hz |
| | | | 720 × 483P | 59.94 Hz |
| | | | 720 × 487I | 29.97 Hz |
| 4 | 720 × 483P | 59.94 Hz | 1920 × 1080I | 29.97 Hz |
| | | | 1920 × 1035I | 29.97 Hz |
| | | | 1280 × 720P | 59.94 Hz |
| | | | 720 × 487I | 29.97 Hz |

**[Table 2]**

| | Video signal before conversion | | Video signal after conversion | | |
|---|---|---|---|---|---|
| | Format | Frequency | Format | Frequency | |
| 5 | 720 × 487I | 29.97 Hz | 1920 × 1080I | 29.97 Hz | |
| | | | 1920 × 1035I | 29.97 Hz | |
| | | | 1280 × 720P | 59.94 Hz | |
| | | | 720 × 483P | 59.94 Hz | |
| 6 | 1920 × 1080I | 25 Hz | 1920 × 1080I | 25 Hz | |
| | | | 1920 × 1080PsF | 25 Hz | |
| | | | 720 × 576I | 25 Hz | |
| 7 | 1920 × 1080P (1920 × 1080I 2:2) | 23.98 Hz | 1920 × 1080PsF | 23.98 Hz | |
| | | | 1920 × 1080I | 29.97 Hz | * |
| | | | 1920 × 1035I | 29.97 Hz | * |
| | | | 1280 × 720P | 59.94 Hz | * |
| | | | 720 × 483P | 59.94 Hz | * |
| | | | 720 × 487I | 29.97 Hz | * |
| 8 | 1920 × 1080P (1920 × 1080I 2:2) | 25 Hz | 1920 × 1080PsF | 25 Hz | |
| | | | 1920 × 1080I | 25 Hz | |
| | | | 720 × 576I | 25 Hz | |

In Tables 1 and 2, the left column indicates the formats of the video signal before conversion that are recorded on the video tape 18, and the right column indicates the formats of the video signal after conversion. In the tables, 1920 x 1080I, for example, indicates an interlace signal having 1920 pixels and 1080 scanning lines, and 1280 x 720P indicates a progressive scan signal having 1280 pixels and 720 scanning lines. In (1) to (6) and (8), in spite of the frequency change which may occur with the conversion between the interlace signal and the progressive scan signal, the fundamental frame frequency or field frequency is not converted, except for the items indicated by * in (7) in which the frame frequency or the field frequency is converted.

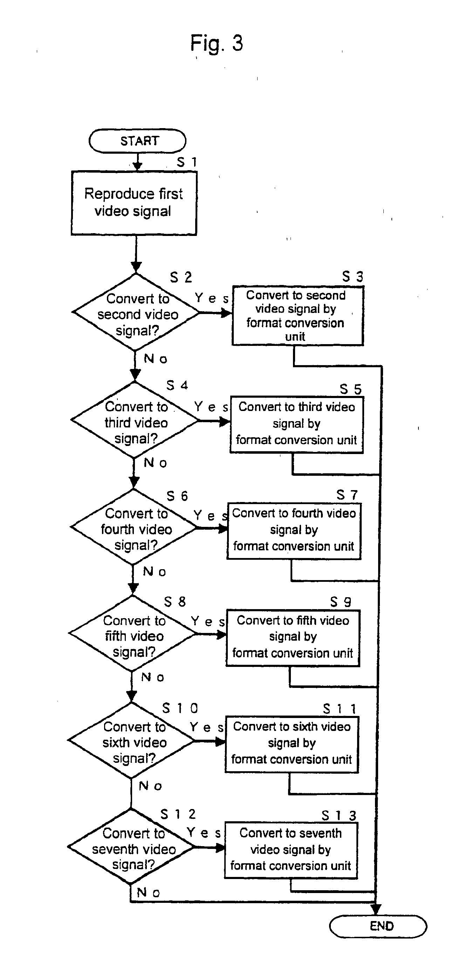

Fig. 3 shows a flowchart for format conversion. As an example, an explanation will be given about the format conversion of (7) in Table 2.

First, the first video signal (progressive scan signal having 1080 scanning lines, 1920 pixels and frame frequency of 24 Hz) recorded on the video tape 18 is reproduced (step S₁).

Next, it is determined whether the first video signal thus reproduced is to be converted into the second video signal (progressive segment frame signal having 1080 scanning lines, 1920 pixels and frame frequency of 24 Hz) (step S₂ ) .

Conversion to the second video signal is effected by the format conversion circuit unit 38 (step S₃).

In the case of no conversion to the second video signal, it is determined whether the first video signal is to be converted to the third video signal (interlace signal having 1080 scanning lines, 1920 pixels and field frequency of 30 Hz) (step S₄).

Conversion, if any, to the third video signal is effected by the format conversion circuit unit 38 (step S₅).

In the case of no conversion to the third video signal, it is then determined whether the first video signal is converted to the fourth video signal (interlace signal having 1035 scanning lines, 1920 pixels and the field frequency of 30 Hz) (step S₆).

Conversion, if any, to the fourth video signal is effected by the format conversion circuit unit 38 (step S₇).

In the case of no conversion to the fourth video signal, it is then determined whether the first video signal is converted to the fifth video signal (progressive scan signal having 720 scanning lines, 1280 pixels and the frame frequency of 60 Hz) (step S₈).

Conversion, if any, to the fifth video signal is effected by the format conversion circuit unit 38 (step S₉).

In the case of no conversion to the fifth video signal, it is then determined whether the first video signal is converted to the sixth video signal (progressive scan signal having 483 scanning lines, 720 pixels and the frame frequency of 60 Hz) (step S₁₀).

Conversion, if any, to the sixth video signal is effected by the format conversion circuit unit 38 (step S₁₁).

In the case of no conversion to the sixth video signal, it is then determined whether the first video signal is converted to the seventh video signal (interlace signal having 487 scanning lines, 720 pixels and the field frequency of 30 Hz) (step S₁₂).

Conversion, if any, to the seventh video signal is effected by the format conversion circuit unit 38 (step S₁₃).

In this way, the first video signal recorded on the video tape 18 is converted to video signals having a plurality of formats in which at least one of the number of scanning lines, the scanning line processing method and the frequency is different. The format can be converted for either equal-speed reproduction or variable-speed reproduction.

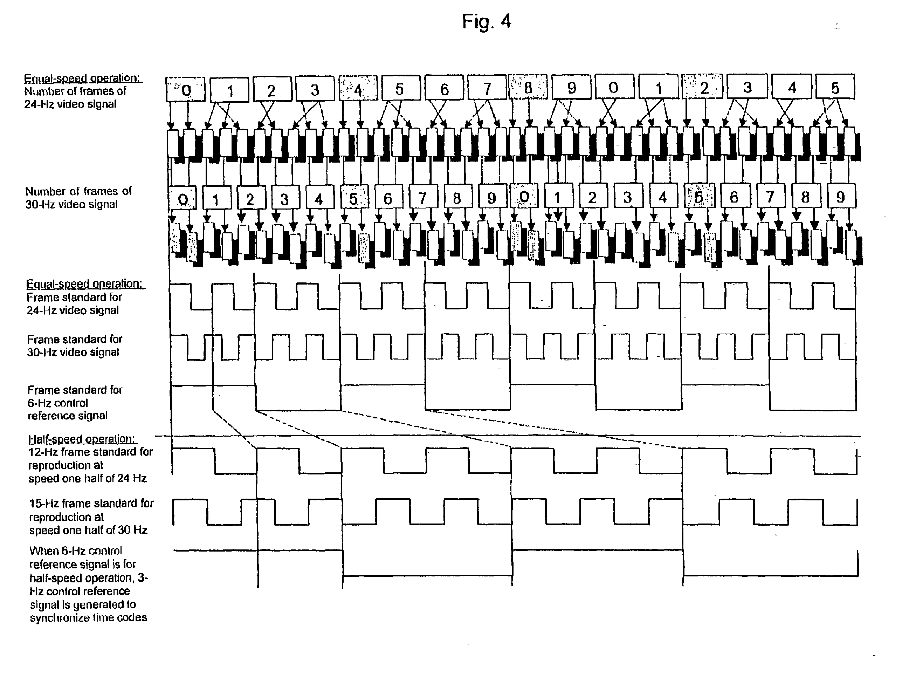

Fig. 4 shows the manner in which the format is converted from 24 Hz to 30 Hz. The 24-Hz video signal before conversion has 24 image frames per second, while the 30-Hz video signal after conversion has 30 image frames per second. Specifically, four image frames of the 24-Hz video signal are converted to five image frames of the 30-Hz video signal, and the time codes of the video signals before and after conversion are synchronized in phase with each other in accordance with the control reference clock of 6 Hz which is the greatest'common denominator of 24 Hz and 30 Hz.

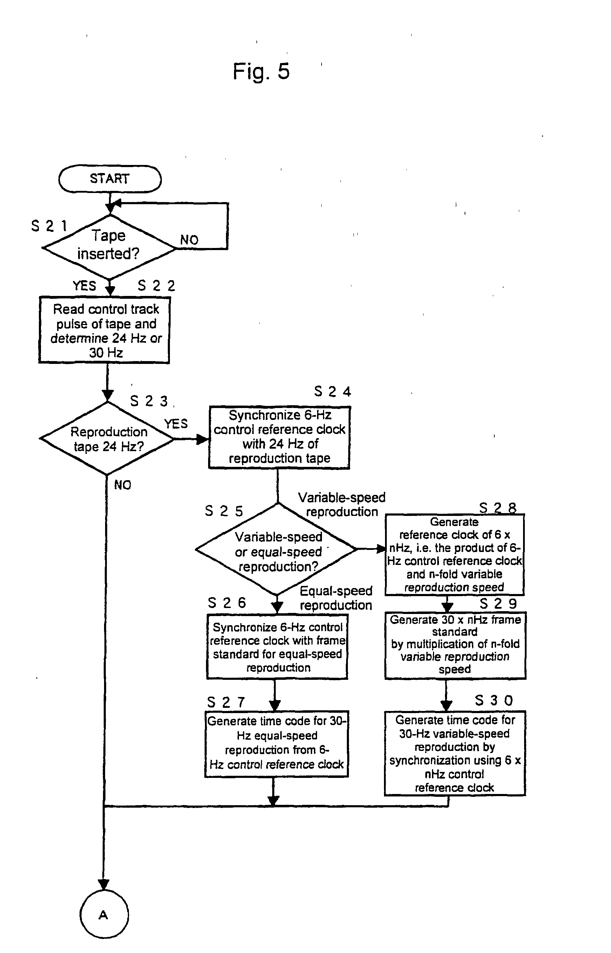

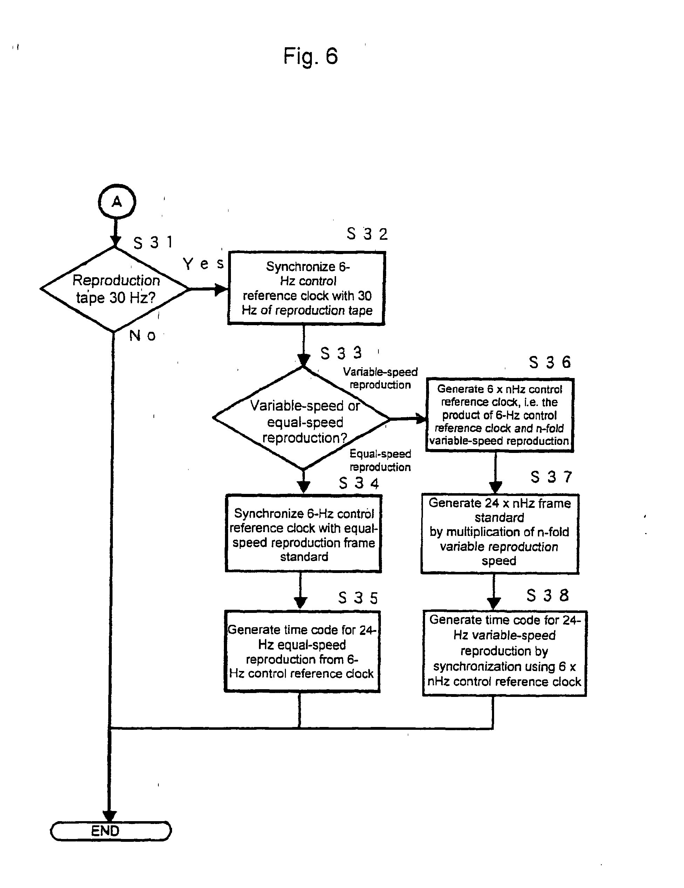

Figs. 5 and 6 show a flow chart for obtaining the synchronism in phase between the time code of the video signal recorded on the video tape 18 and the time code of the video signal after conversion, using the reference clock. Incidentally, the method of phase synchronization is different depending on whether the reproduction speed of the video tape 18 is on equal-speed reproduction or variable-speed reproduction.

First, as shown in Fig. 5, it is determined whether the video tape 18 has been inserted or not (step S₂₁).

In the case where the video tape 18 has been inserted, the control track pulse of the tape is read and it is determined whether 24 Hz or 30 Hz is involved (step S₂₂).

Next, it is determined whether the video tape 18 is 24 Hz or not (step S₂₃) .

In the case where the video tape 18 is 24 Hz, the 6-Hz control reference clock is synchronized with the frequency 24 Hz of the tape (step S₂₄) .

Next, it is determined whether the reproduction speed of the video tape 18 is on equal-speed reproduction or a variable-speed reproduction (step S₂₅).

In the case of an equal-speed reproduction, the 6-Hz control reference clock is synchronized with the frame standard for the equal-speed reproduction (step S₂₆).

Further, a time code for 30-Hz equal-speed reproduction is generated from the 6-Hz control reference clock (step S₂₇).

Also, in the case where the variable-speed reproduction is determined in step S₂₅, a control reference clock of 6 x nHz, i.e. the frequency equal to the product of the 6-Hz control reference clock and the variable reproduction speed (n-fold speed) is generated (step S₂₈).

Next, a frame standard of 30 x nHz, i.e. the frequency equal to a multiplication of the variable-speed reproduction (n-fold speed) is generated (step S₂₉).

Further, the synchronization is achieved by the control reference clock of 6 x nHz, and the time code for 30-Hz variable-speed reproduction is generated (step S₃₀).

In the case where the video tape 18 is not 24 Hz in step S₂₃, as shown in Fig. 6, it is determined whether the video tape 18 is 30 Hz or not (step S₃₁).

In the case where the video tape 18 is 30 Hz, the 6-Hz control reference clock is synchronized with 30 Hz of the tape (step S₃₂) .

Next, it is determined whether the reproduction speed of the video tape 18 is on equal-speed reproduction or a variable-speed reproduction (step S₃₃).

In the case of an equal-speed reproduction, the 6-Hz control reference clock is synchronized with the frame standard for equal-speed reproduction (step S₃₄).

Further, a time code for 24-Hz equal-speed reproduction is generated by the 6-Hz control reference clock (step S₃₅).

Also, in the case where the variable-speed reproduction is determined in step S₃₃, the control reference clock of 6 x nHz, i.e. the frequency equal to the product of the 6-Hz control reference clock and the variable reproduction speed (n-fold speed) is generated (step S₃₆).

Next, the frame standard of 24 x nHz, i.e. a multiplication of the variable-speed reproduction speed (n-fold speed) is generated (step S₃₇).

Further, the synchronization is achieved by the control reference clock of 6 x nHz, and a time code for 24-Hz variable-speed reproduction is generated (step S₃₈).

In this way, the time code of the video signal recorded on the video tape 18 is synchronized in phase with the time code of the converted video signal using the 6-Hz control reference clock. Also, the 6-Hz control reference signal in phase with the HD-REF input signal and the SD-REF input signal can be generated.

Incidentally, without providing the 6-Hz control reference clock generating unit 68, the control reference clock may be generated utilizing the clock built in the control unit 22 constituting a microcomputer. Also, the control reference clock is not limited to 6 Hz, but may be of any frequency capable of phase synchronization between the time codes of the video signals before and after conversion. Specifically, in the case where the frequencies before and after conversion are 23.98 Hz and 29.97 Hz, respectively, the frequency associated with the greatest common denominator of 23.98 Hz and 29.97 Hz is used as a control reference clock.

### INDUSTRIAL APPLICABILITY

According to this invention, the video signal recorded in a magnetic medium can be converted to video signals having a plurality of different formats, and the time code of the video signal recorded in the magnetic medium can be synchronized in phase with the time code of the video signal after conversion.

## Claims

1. A multiformat recording and reproducing apparatus comprising a signal reproduction unit for reproducing a video signal recorded in a magnetic medium, a format determining unit for determining a format of the reproduced video signal, a format conversion unit for converting the reproduced video signal into a plurality of video signals in which at least one of the number of scanning lines, a scanning line processing method and a frequency is different, and a signal output unit for outputting the converted video signal.

2. A multiformat recording and reproducing apparatus comprising a signal reproduction unit for reproducing a video signal recorded in a magnetic medium, a format determining unit for determining a format of the reproduced video signal, a format conversion unit for converting the reproduced video signal into a plurality of video signals in which at least one of the number of scanning lines, a scanning line processing method and a frequency is different, a signal output unit for outputting the converted video signal, a time code output unit for outputting a time code of the converted video signal, and a reference clock generating unit for generating a reference clock for synchronizing the phase between the time code of the reproduced video signal and the time code of the converted video signal.

3. A multiformat recording and reproducing apparatus as claimed in claim 2, wherein the reference clock is 6 Hz.

4. A multiformat recording and reproducing apparatus comprising a signal reproduction unit for reproducing, at variable speeds, a video signal recorded in a magnetic medium, a format determining unit for determining a format of the reproduced video signal, a format conversion unit for converting the reproduced video signal into a plurality of video signals in which at least one of the number of scanning lines, a scanning line processing method and a frequency is different, and a signal output unit for outputting the converted video signal.

5. A multiformat recording and reproducing apparatus comprising a signal reproduction unit for reproducing, at n-fold variable speeds, a video signal recorded in a magnetic medium, a format determining unit for determining a format of the reproduced video signal, a format conversion unit for converting the reproduced video signal into a plurality of video signals in which at least one of the number of scanning lines, a scanning line processing method and a frequency is different, a signal output unit for outputting the converted video signal, a time code output unit for outputting a time code of the converted video signal, and a reference clock generating unit for generating a reference clock for synchronizing, at an n-fold reference clock, the phase between the time code of the reproduced video signal and the time code of the converted video signal.

6. A multiformat recording and reproducing apparatus as claimed in claim 5, wherein the reference clock is 6 Hz.
